# EUROPEAN PATENT APPLICATION

(11) **EP 0 937 523 A2**
(43) Date of publication of application: **25.08.1999**
(21) Application number: 99301343.2
(22) Date of filing: 24.02.1999
(51) Int. Cl.: B21K 1/30

(54) **Outer teeth, inner teeth, and producing method thereof**

(30) Priority: 24.02.1998 JP 4239798
(71) Applicant: FUJIKIKO KABUSHIKI KAISHA, Tokyo 103 (JP)
(72) Inventor: Ohya, Masakiyo, c/o Fujikiko Kabushiki Kaisha, Kosai-shi, Shizuoka-ken (JP)
(74) Representative: Abbie, Andrew Kenneth

(57) **Abstract**

A plate material (3) is pressed to project a circular projection (5) having a diameter greater than an outer diameter of an outer teeth gear (10) to be formed. An outer peripheral portion of this circular projection (5) is pressed back at equal distances toward a back surface of the plate material (3) to form gear teeth (11) around the outer peripheral portion. A pressed portion of the outer peripheral portion is projected toward the back surface of the plate material (3) to form a connection portion connected to an inner peripheral surface of a circular recess formed at the side of the back surface of the circular projection (5).

## Description

### BACKGROUND OF THE INVENTION

### 1. Field of the Invention

The present invention relates to outer teeth, inner teeth, and a producing method thereof, and more particularly, to outer teeth, inner teeth, and a producing method thereof used for a reclining mechanism of a seat of a vehicle.

### 2. Description of the Related Art

A Taumel mechanism is used as one example in a reclining mechanism of a vehicle seat.

In this Taumel mechanism, a pair of outer teeth and inner teeth are used, and each of the outer and inner teeth are formed by one time precision extrusion.

However, in the case of precision extrusion, a high load is applied to press dies because forming is carried out by pressing one time. Further, when the gear is formed, since a load is concentrated to tip end portions of the inner and outer teeth, forming load becomes high, and the lifetime of the press dies is shortened.

Further, since each tooth of the inner and outer teeth formed at the time of extrusion is pressed by the press dies along the tooth shape, the opposite side from the pressed side is drawn by remaining portion to generate sags, and the sags of the drawn portion become greater as approaching the tip end of the tooth.

### SUMMARY OF THE INVENTION

It is an object of the present invention to provide outer teeth, inner teeth and a producing method thereof in which as compared with conventional outer and inner teeth, it is possible to reduce sags on a drawn portion formed at a tooth end portion of inner and outer teeth of gears when the gears are formed from plate material, and workability of gears is enhanced.

According to a first aspect of the present invention, there is provided an outer teeth gear, comprising: a plate material having a surface side, a back surface side, and a circular recess which is formed on the back surface side and is defined by an inner peripheral surface; a circular projection which is formed on the surface side of the plate material corresponding to the circular recess on the back surface side by extrusion forming and has an outer peripheral portion; a gear tooth which is formed around the outer peripheral portion of the circular projection by pressing back the outer peripheral portion of the circular projection at an equal distance toward the back surface side of the plate material and has a valley; and a connection portion which projects toward the back surface side of the plate material corresponding to the valley of the gear tooth and is connected to the inner peripheral surface of the circular recess.

"A equal distance" means a length between a gear tooth and a neighbor's gear tooth thereof.

In the outer teeth gear of the invention, the gear teeth are formed by pressing back the outer peripheral portion of the circular projection which is previously formed by extrusion forming on the surface of the plate material toward the back surface side of the plate material. The material which is pressed back and moved toward the back surface side of the plate material is connected to the inner peripheral surface of the circular recess which is formed on the back surface side of the circular projection, and is formed as the connection portion. The pressed back material is plastically deformed and formed as the connection portion. Remaining pressed back material flows into a superposed portion of the plate material and the circular projection.

Therefore, the connection portion formed at the back surface side can be formed of only material which is required for securing the strength, waste of material can be reduced, and since composition (flow) of the material of the superposed portion of the plate material and the circular projection is continuous, its strength can be increased.

According to a second aspect of the invention, there is provided an inner teeth gear, comprisiny: a plate material which has a surface side, a back surface side, and a circular recess which is formed on the surface side by intrusion forming and is defined by an inner peripheral portion; a circular projection which is formed on the back surface side of the plate material corresponding to the circular recess and has an outer periphery portion; a gear tooth which is formed around the inner peripheral portion of the circular recess by pressing a surrounding portion surrounding the circular recess at an equal distance toward the back surface side of the plate material and has a valley; and a connection portion which projects toward the back surface side of the plate material corresponding to the valley of the gear tooth and is connected to the outer peripheral surface of the circular projection.

In the inner teeth gear of the invention, the gear teeth are formed by pressing the surrounding portion of the circular recess which is previously formed by intrusion forming on the surface of the plate material toward the back surface side of the plate material. The material which is pressed and moved toward the back surface side of the plate material is connected to the outer peripheral surface of the circular projection which is formed on the back surface side of the circular recess, and is formed as the connection portion. The pressed back material is plastically deformed and formed as the connection portion. Remaining pressed material flows into a superposed portion of the plate material and the circular recess.

Therefore, the connection portion formed at the back surface side can be formed of only material which is required for securing the strength, waste of material can be reduced, and since composition (flow) of the material of the superposed portion of the plate material and the circular recess is continuous, its strength can be increased.

According to a third aspect of the invention, there is provided a producing method of an outer teeth gear by forming gear teeth around an outer peripheral surface of a circular projection which is formed from a plate material by extrusion forming, and the producing method comprises: a first step for pressing a plate material for extrusion forming, in an embossed manner, a circular projection having a diameter greater than that of a gear tooth to be formed at a surface side of a plate material; and a second step for pressing back an outer peripheral portion of a circular projection at an equal distance toward a back surface side of a plate material to form a gear tooth around the outer peripheral portion of the circular projection, and for projecting a pressed portion of an outer peripheral portion toward a back surface side of a plate material to form a connection portion connected to an inner peripheral surface of a circular recess formed at a back surface side of a circular projection.

According to this invention, the outer teeth gear is formed by extrusion forming from the plate material through two steps, i.e., the first step for pressing the plate material for projecting the circular projection; and a second step for subjecting the outer peripheral portion of the circular projection to the press forming from the surface side of the plate material, thereby forming the gear teeth of the outer teeth gear around the outer peripheral portion.

Further, when the gear teeth of the outer teeth gear are formed around the outer peripheral portion of the circular projection in the second step, the pressed portion of the outer peripheral portion is projected and escaped toward the back surface side, the portion is plastically deformed, and is connected to the inner peripheral surface of the circular recess formed on the back surface side.

Therefore, as compared with the conventional producing method of the outer teeth gear which is produced by precision extrusion with only one step, forming pressure when the gear teeth is formed can be reduced. As a result, a drawn portion formed on tip end portion of each of the gear teeth at the time of gear teeth formation is reduced, and the effective tooth width of the gear teeth can be increased, and it is possible to make the plate thickness of the base material can be made thinner correspondingly.

Further, the structure of the pressdies used in the first step can be simplified, the costs for producing the press dies can be reduced, and lifetime of the press dies can be elongated and therefore, the producing costs of the outer teeth gear can be reduced.

In the above producing method of the outer teeth gear, it is preferable that an outer peripheral surface of the circular projection formed in the first step is formed into a corrugated shape corresponding to the number of teeth of the outer teeth gear.

Therefore, the press forming pressure against the circular projection in the second step can further be reduced. As a result, the life time of the press dies used in the second step is elongated, the producing costs of the outer teeth gear can be reduced, the drawn portion formed at the tip end of the tooth of each of the gear teeth at the time of formation of the gear teeth in the second step can further be reduced, and the plate thickness of the base material can further be made thinner correspondingly.

According to a fourth aspect of the invention, there is provided a producing method of an inner teeth gear by forming gear teeth around an inner peripheral surface of a circular recess which is formed from a plate material by intrusion forming, the producing method of an inner teeth gear comprises, a first step for pressing a plate material for intrusion forming, in an embossed manner, a circular recess having a diameter smaller than that of a gear tooth to be formed at a surface side of the plate material; and a second step for pressing a surrounding portion surrounding a circular recess at an equal distance toward a back surface of a plate material to form gear teeth around an inner peripheral portion of a circular recess; and for projecting a pressed portion of a surrounding portion toward a back surface side of a plate material to form a connection portion connected to an outer peripheral surface of a circular projection formed at a back surface side of a circular recess.

According to this invention, the inner teeth gear is formed by intrusion forming from the plate material through two steps, i.e., the first step for pressing the plate material for forming the circular recess; and a second step for pressing the surrounding portion which surrounds the circular recess at equal distances toward the back surface of the plate material, thereby forming the gear teeth around the inner peripheral surface of the circular recess.

Further, in a second step when the gear teeth of the inner teeth gear are formed around the surrounding portion surrounding the circular recess, the pressed portion of the surrounding portion is projected and escaped toward the back surface side of the plate material, the portion is plastically deformed, and is connected to the inner peripheral surface of the circular projection formed on the back surface side.

Therefore, as compared with the conventional producing method of the inner teeth gear which is produced by precision intrusion with only one step, forming pressure when the gear teeth is formed can be reduced. As a result, a drawn portion formed on tip end portion of each of the gear teeth at the time of gear teeth formation is reduced, and the effective tooth width of the gear teeth can be increased, and it is possible to make the plate thickness of the base material can be made thinner correspondingly.

Further, the structure of the press dies used in the first step can be simplified, the costs for producing the press dies can be reduced, and lifetime of the press dies can be elongated and therefore, the producing costs of the inner teeth gear can be reduced.

In the above producing method of the inner teeth gear, it is preferable that an inner peripheral surface of the circular recess formed in the first step is formed into a corrugated shape corresponding to a number of teeth of a inner teeth gear.

Therefore, the press forming pressure against the plate material in the second step can further be reduced. As a result, the life time of the press dies used in the second step is elongated, the producing costs of the inner teeth gear can be reduced, the drawn portion formed at the tip end of the tooth of each of the gear teeth at the time of formation of the gear teeth in the second step can further be reduced, and the plate thickness of the base material can further be made thinner correspondingly.

### BRIEF DESCRIPTION OF THE DRAWINGS

Fig. 1 shows a seat of a vehicle to which a reclining mechanism using an outer teeth gear and an inner teeth gear according to the present invention is applied;
Fig. 2 is an exploded perspective view of the reclining mechanism shown in Fig. 1;
Fig. 3 is a perspective view showing the outer teeth gear according to a first embodiment;
Fig. 4 is a perspective view of a back side of the outer teeth gear shown in Fig. 3;
Fig. 5 is a diagram for explaining a first step of a producing method shown in Fig. 3;
Fig. 6A is a perspective view of dies used for a second step of the producing method;
Fig. 6B is a diagram for explaining a second step of the producing method shown in Fig. 3;
Fig. 7 is a sectional view taken along the line VII-VII in Fig. 3;
Fig. 8 is a diagram for explaining another first step of a producing method different from the first step shown in Fig. 5;
Fig. 9 is a perspective view showing the inner teeth gear according to a second embodiment;
Fig. 10 is a perspective view of a back side of the inner teeth gear shown in Fig. 9;
Fig. 11 is a diagram for explaining a first step of a producing method shown in Fig. 9;
Fig. 12 is a diagram for explaining a second step of the producing method shown in Fig. 9;
Fig. 13 is a sectional view taken along the line XIII - XIII in Fig. 9;
Fig. 14 is a diagram for explaining another first step of a producing method different from the first step shown in Fig. 11;
Fig. 15 is a partially enlarged sectional view of a first hinge portion according to a comparative example; and
Fig. 16 is a partially enlarged sectional view of a second hinge portion according to another comparative example.

### DETAILED DESCRIPTION OF THE PREFERRED EMBODIMENTS

Embodiments to which the present invention is applied will be described in detail with reference to the drawings.

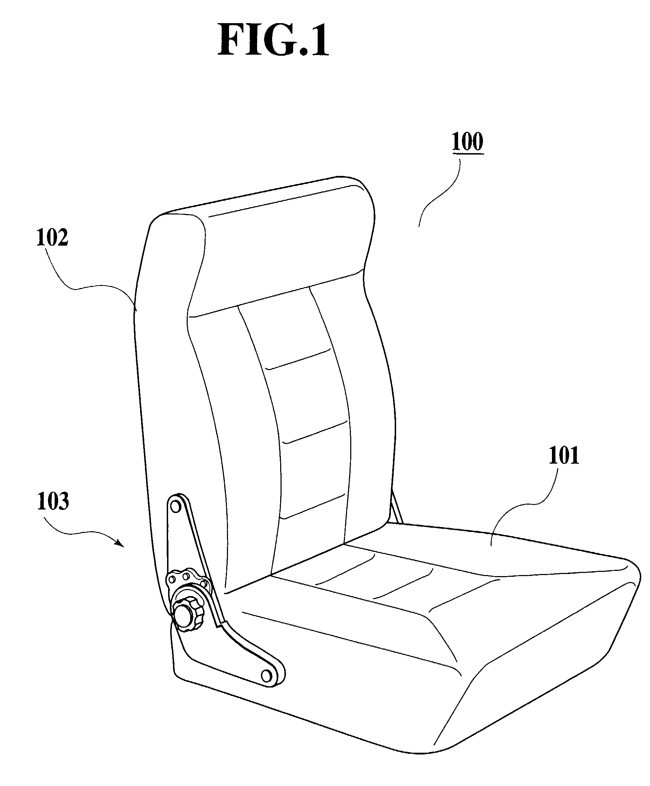

Fig. 1 shows a seat of a vehicle according to the embodiment to which the present invention is applied.

A seat 100 of a vehicle comprises a seat cushion 101 disposed in the vehicle, a seat back 102 provided at one end of the seat cushion 101, and a reclining mechanism 103 fixed to sides of the seat cushion 101 and the seat back 102.

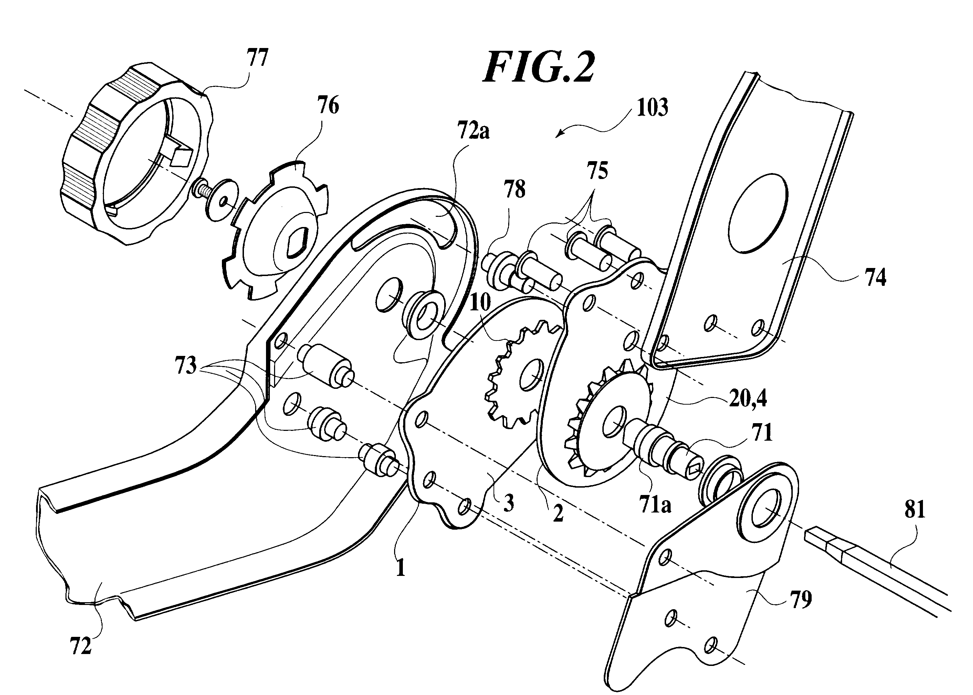

As shown in Fig. 2, the reclining mechanism 103 is a so-called Taumel mechanism, and comprises an outer teeth gear 10 made of metal and projected from a first hinge member 1, and an inner teeth gear 20 recessed in a second hinge member 2. The outer and inner teeth gears 10 and 20 have different number of teeth, and the number of teeth of the inner teeth gear 20 is greater than that of the outer teeth gear 10 by one.

The first and second hinge members 1 and 2 are relatively movably connected to each other by a driving shaft 71 having an eccentric cam portion 71a passing through rotation centers of the gears 10 and 20 and located in the rotation center of the inner teeth gear 20 in a state in which the outer teeth gear 10 of the first hinge member 1 is disposed in the inner teeth gear 20 of the second hinge member 2.

The first hinge member 1 is fixed to a base frame 72 through a spacer pin 73 for supporting the seat cushion of the vehicle seat, and the second hinge member 2 is fixed to a side retainer bracket 74 through a pin 75 for supporting the seat back of the vehicle seat.

In Fig. 2, the base frame 72 is formed with a guide hole 72a for determining a rotational region of the second hinge member 2, a guide pin 78 is fixed to the second hinge member 2 and is engaged with the guide hole 72, a support disk 79 is fixed to a base frame 72 through the spacer pin 73 and is rotatably supported on the driving shaft 71, and a rod 81 is mounted to the driving shaft 71.

In the reclining mechanism 103, an operational knob 77 fixed to an end of the driving shaft 71 through a support disk 76 is rotated to rotate the driving shaft 71, the inner teeth gear 20 is rotated, a meshing position of the inner and outer teeth gears 10 and 20 is varied, a position of the second hinge member 2 relative to the first hinge member 1 is changed, and as a result, it is possible to adjust and fix the angle of the seat back with respect to the seat cushion of the vehicle seat.

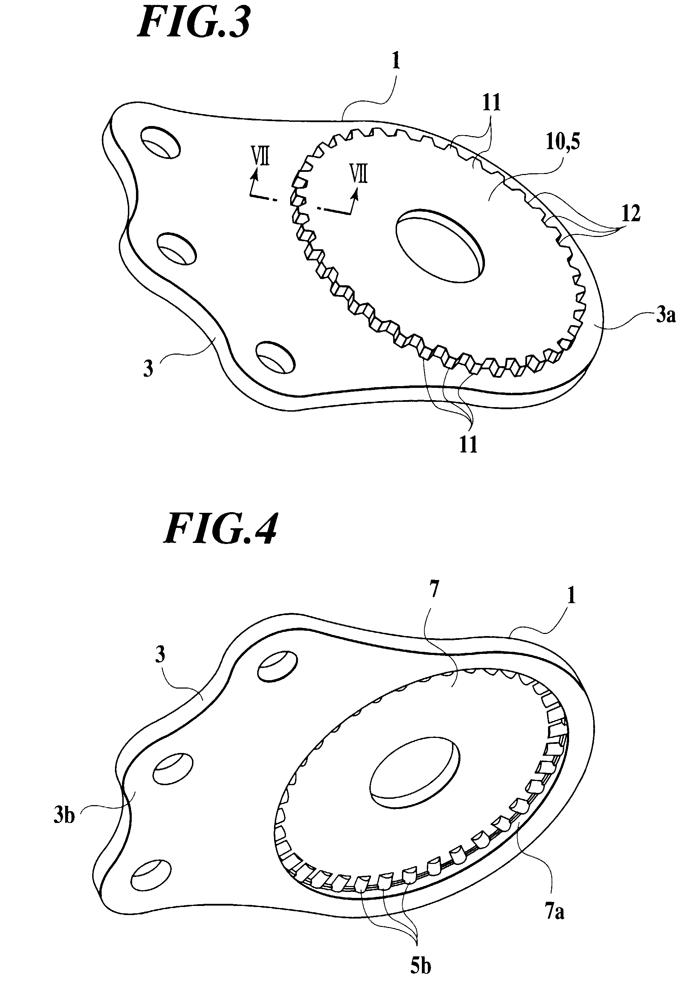

As shown in Figs. 3 and 4, the outer teeth gear 10 is made of metal and projects from the first hinge member 1.

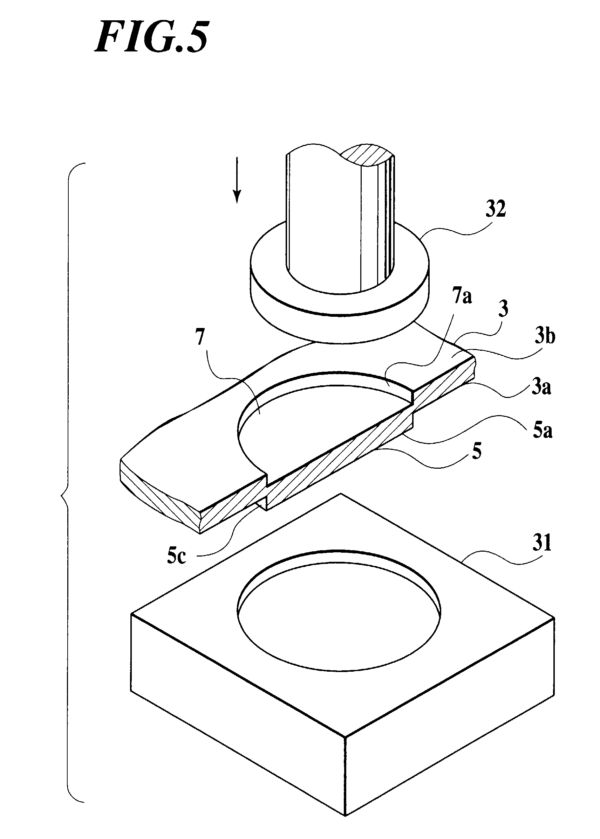

When the outer teeth gear 10 is produced, as shown in Fig. 5, in a first step, a metal plate 3 as a base material or a plate material is pressed from a back surface 3b, and a circular projection 5 having an outer diameter slightly greater than that of the outer teeth gear 10 to be formed is projected in an embossed manner. In Fig. 5, the reference numeral 5c represents an outer peripheral surface of the circular projection 5.

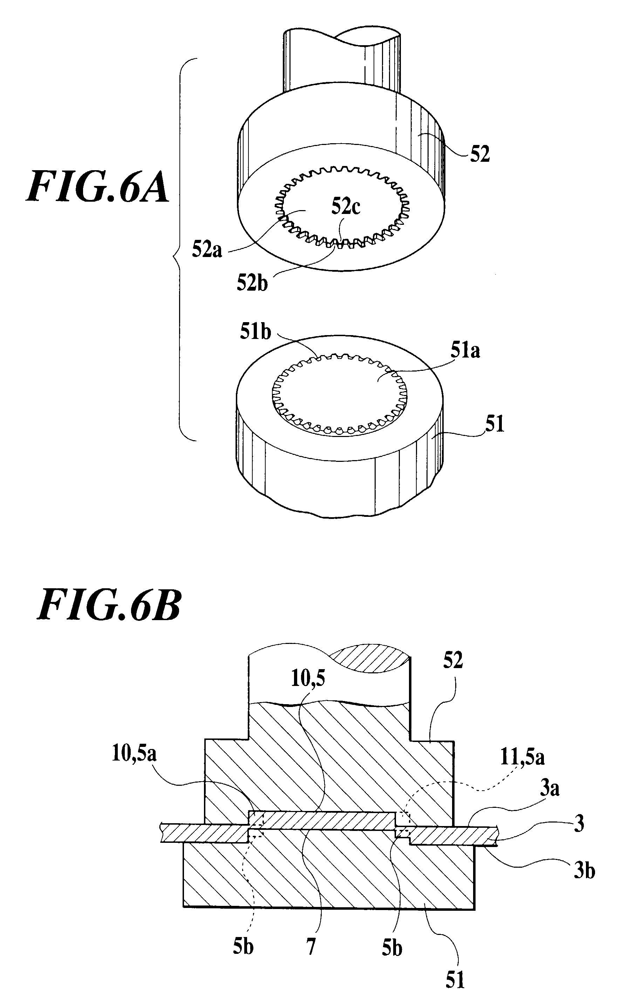

In a second step, as shown in Fig. 6A, dies which have a die 51 and a punch 52 is used. The die 51 has a projection 51a on a end surface and concave surfaces 51b in a semicircular shape is formed at an equal distance in a periphery of the projection 51a. The punch 52 has a recess 52a defined by a peripheral wall in a end surface. The peripheral wall has mountain portions 52b therein at an equal distance and valley portions 52c formed between the mountain portions 52b.

Next, as shown in Fig. 6B, in the second step, an outer peripheral portion 5a of the circular projection 5 is subjected to a press forming from a surface 3a of the plate material 3 by the mountain portions 52b and the valley portions 52c, and the outer peripheral portion 5a is pressed back by the concave surfaces 51b toward the back surface 3b at an equal distance. With this operation, gear teeth 11 of the outer teeth gear 10 are formed around the outer peripheral portion 5a by the valley portions 52c and valleys 12 between gear teeth 11 are formed by the mountain portions 52b. The pressed portion of the outer peripheral portion 5a is projected toward the back surface 3b, and a connection portion 5b which is connected to an inner peripheral surface 7a of a circular recess 7 formed at the side of the back surface 3b of the circular projection 5 is formed.

Therefore, the outer teeth gear 10 is formed by extrusion from the metal plate material 3 as the base material, and has a tooth width tl which is thinner than a plate thickness T1 of the plate material 3, and the outer teeth gear 10 is integrally connected at its entire outer periphery to the plate material 3. The outer teeth gear 10 comprises the circular projection 5 which is previously formed by extrusion at the side of the surface 3a of the plate material 3, the gear teeth 11 formed around the outer peripheral portion 5a of this circular projection 5, and the connection portion 5b which projects toward the back surface 3b of the plate material 3 corresponding to valleys 12 of the gear teeth 11 and which is connected to the inner peripheral surface 7a of the circular recess 7 formed at the side of the back surface 3b of the circular projection 5.

The first hinge member 1 is produced such that the metal plate material 3 which is the base material is extruded to form the outer teeth gear 10 and then, the plate material 3 is subjected to a predetermined cutting and drilling working.

Although the connection portion 5b is formed such as to project into a semi-cylindrical shape toward the back surface 3b of the circular projection 5, the connection portion 5b may be formed into a slope like connection portion 4d of the inner teeth gear 20 which will be explained later, or gear teeth only if the outer teeth gear 10 which is to be formed at the side of the surface 3a can be distinguished.

The above explained outer teeth gear 10 is produced through two steps, i.e., the first step for extruding the circular projection 5 at the side of the surface 3a of the plate material 3, and the second step for press forming the gear teeth 11 around the outer peripheral portion 5a of this circular projection 5.

Further, the gear teeth 11 of this outer teeth gear 10 are formed by pressing back the outer peripheral portion 5a of the circular projection 5 which is formed by extrusion at the side of the surface 3a of the plate material 3 toward the back surface 3b of the plate material 3. When the gear teeth 11 are press formed around the outer peripheral portion 5a of the circular projection 5, the portion of the circular projection 5 which is to be pressed is projected and escaped toward the back surface 3b of the plate material 3 and plastically deformed, and the connection portion 5b which is connected to the inner peripheral surface 7a of the circular recess 7 formed at the side of the back surface 3b is formed.

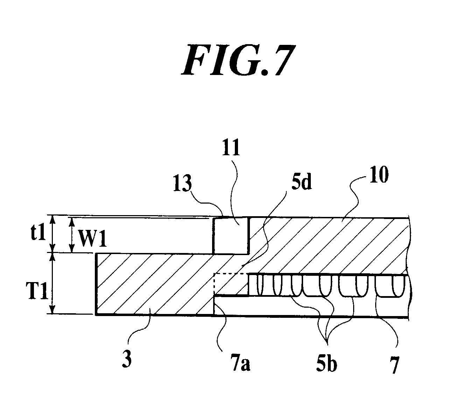

Therefore, in the case of this outer teeth gear 10, as compared with the conventional outer teeth gear which is produced by precision extrusion with only one step, forming pressure when the gear teeth 11 is formed is reduced. As a result, as shown in Fig. 7, a drawn portion 13 formed on tip end portion of each of the gear teeth 11 at the time of gear teeth formation is reduced, and the effective tooth width W1 of the gear teeth 11 is prevented from being reduced, and it is possible to make the plate thickness T1 of the plate material 3 as the base material can be made thinner correspondingly.

Further, since the portion of the circular projection which is to be pressed back is moved toward the back surface 3b by plastic deformation, the connection portion 5b is formed, and the remaining material which was pushed back flows to a superposed portion 5d of the plate material 3 and the circular projection 5. Therefore, the connection portion 5b can be formed of only material which is required for securing the strength, waste of material can be reduced, and since composition (flow) of the material of the superposed portion 5d is continuous, its strength can be increased.

The producing method of the outer teeth gear 10 comprises two steps, i.e., a first step in which the plate material 3 is pressed from the back surface 3b, thereby projecting the circular projection 5 having an outer diameter slightly greater than that of the outer teeth gear 10 to be formed in the embossed manner at the side of the surface 3a of the plate material 3, and a second step in which the outer peripheral portion 5a of this circular projection 5 is subjected to the press forming from the surface 3a of the plate material 3, the outer peripheral portion 5a of the circular projection 5 is pressed back toward the back surface 3b of the plate material at equal distances, thereby forming the gear teeth 11 of the outer teeth gear 10, so that the outer teeth gear 10 connected at its entire outer periphery to the plate material 3 is extruded from the plate material 3.

Further, when the gear teeth 11 of the outer teeth gear 10 are press formed around the outer peripheral portion 5a of the circular projection 5, a portion of the outer peripheral portion 5a which is pressed is projected and escaped toward the back surface 3b of the plate material 3, and is plastically deformed and the connection portion 5b which is connected to the inner peripheral surface 7a of the circular recess 7 formed in the side of the back surface 3b of the plate material 3 is formed.

Therefore, according to the producing method of the outer teeth gear 10 of the present invention, as compared with the conventional producing method of the outer teeth gear by precision extrusion with one step only, the forming pressure when the gear teeth 11 are formed can be reduced. As a result, the drawn portion 13 which is formed at the tip end portion of each of the gear teeth 11 at the time of formation of the gear teeth can be reduced, the effective tooth width W1 of the gear teeth 11 can be prevented from being reduced, and the plate thickness T1 of the base material can be made thinner correspondingly.

In the producing method of the outer teeth gear 10, as shown in Fig. 5, the press formed circular projection 5 is formed such that its outer diameter is shaped into a substantially circular whose outer diameter is slightly greater than a diameter of the tip ends of the outer teeth gear 10 in the step 1.

Therefore, the structure of the press dies 31 and 32 used in the first step can be simplified. As a result, the costs for producing the press dies 31 and 32 can be reduced, and lifetime of the press dies 31 and 32 can be elongated and therefore, the producing costs of the outer teeth gear 10 can be reduced.

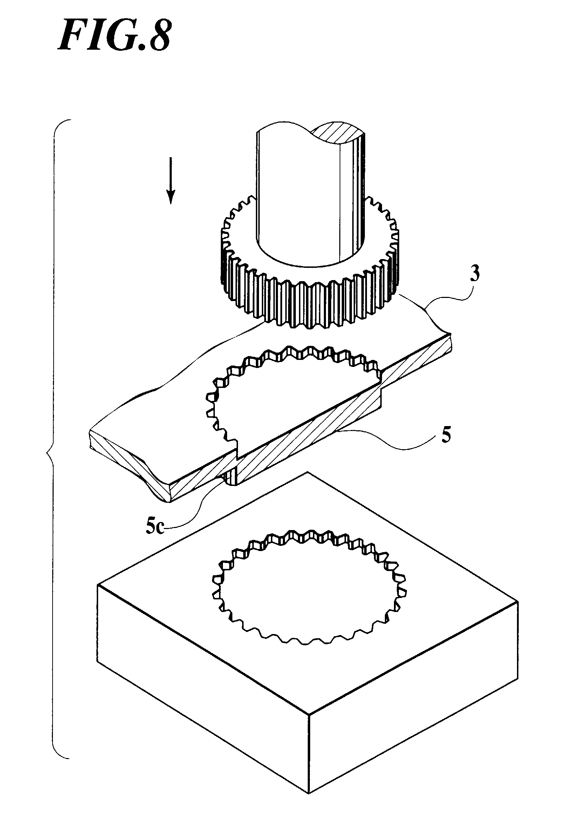

Figs. 8 is an explanatory diagram showing another first step different from the first step shown in Fig. 5. In this first step, as shown in Figs. 8, the outer peripheral surface 5c of the circular projection 5 is formed into a corrugated shape corresponding to the number of teeth of the outer teeth gear 10.

Therefore, according to the producing method of the outer teeth gear 10 having the first step shown in Fig. 8, as compared with the producing method of the outer teeth gear 10 having the first step shown in Fig. 5, a pressed amount of the circular projection 5 in the second step is reduced. As a result, the press forming pressure against the circular projection 5 in the second step can further be reduced.

Therefore, according to the producing method of the outer teeth gear 10 having the first step shown in Fig. 8, as compared with the producing method of the outer teeth gear 10 having the first step shown in Fig. 5, since the life time of the press dies 51 and 52 (see Fig. 6) used in the second step is elongated, the producing costs of the outer teeth gear 10 can be reduced, the drawn portion 13 formed at the tip end of the tooth of each of the gear teeth 11 at the time of formation of the gear teeth in the second step can further be reduced, and the plate thickness T1 of the base material can further be made thinner correspondingly.

Although the above described outer teeth gear 10 and its producing method can be used for the reclining mechanism of the vehicle seat, the outer teeth gear 10 and its producing method of the present invention should not be limited to be used only for the reclining mechanism of the vehicle seat.

### (Second Embodiment)

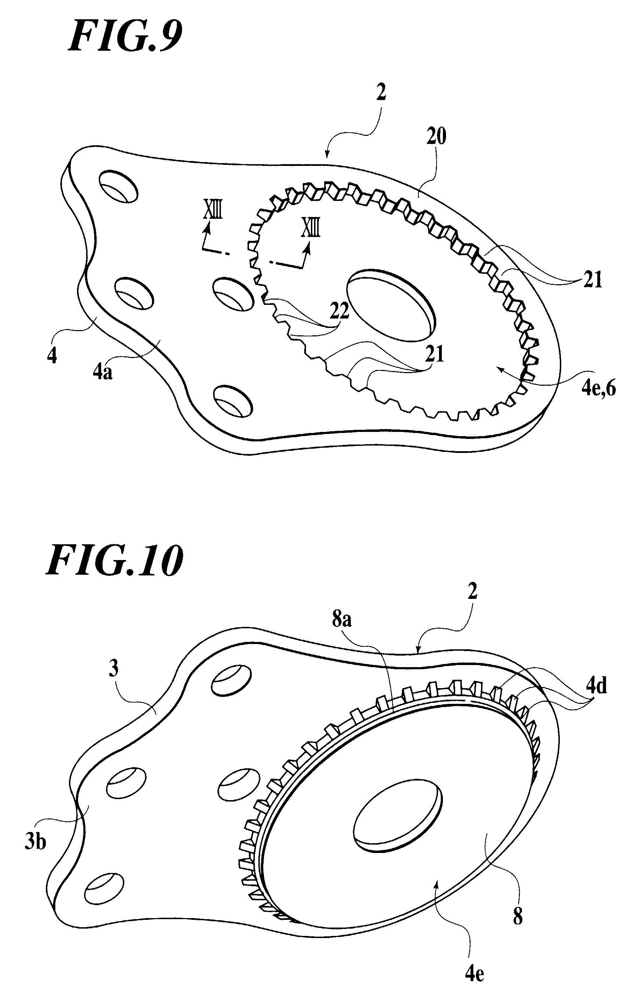

Figs. 9 to 13 show a second embodiment which is one example of embodiments.

As shown in Figs. 9 and 10, the inner teeth gear 20 is used for the reclining mechanism 103 of the vehicle seat 100, and is recessed in the metal plate like second hinge member 2.

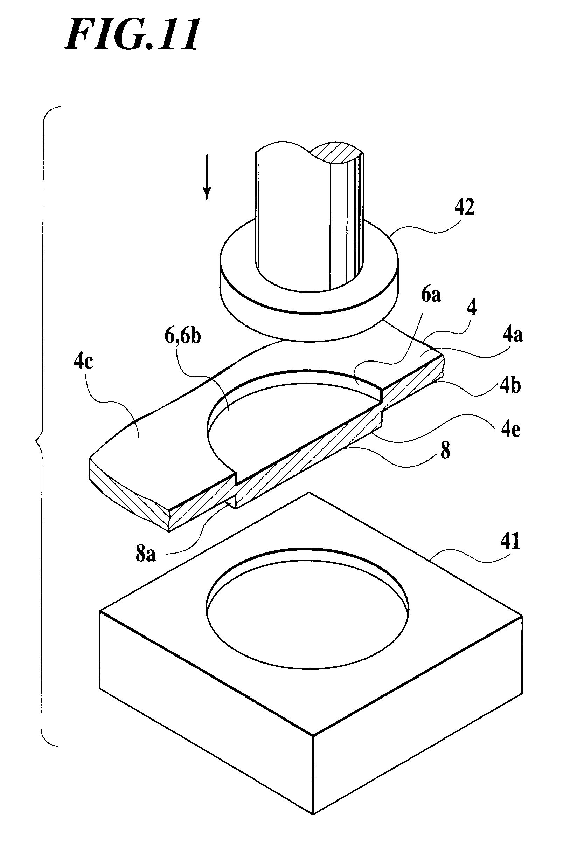

In order to produce this inner teeth gear 20, as shown in Fig. 11, in a first step, a metal plate material 4 which is a base material is pressed from the side of a surface 4a, thereby forming a circular recess 6 having an inner diameter slightly smaller than that of the inner teeth gear 20 to be formed at the side of the surface 4a of the plate material 4 in the embossed manner.

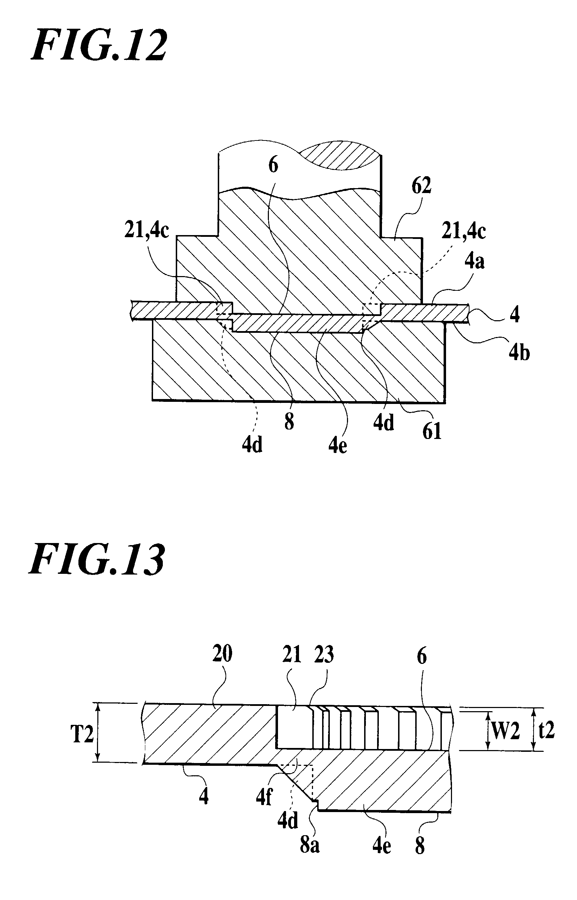

Next, as shown in Fig. 12, in a second step, a surrounding portion 4c surrounding the circular recess 6 in the plate material 4 is subjected to press forming from the side of the surface 4a of the plate material 4 to a bottom surface 6b of the circular recess 6, and the surrounding portion 4c is intruded toward a back surface 4b of the plate material 4 at equal distances. With this operation, the surrounding portion 4c including the inner peripheral surface 6a of the circular recess 6 is formed with gear teeth 21 of the inner teeth gear 20, a portion of the surrounding portion 4c which is pressed is projected toward the back surface 4b, and a connection portion 4d which is connected to an outer peripheral surface 8a of a circular projection 8 formed at the side of the back surface 4b of the circular recess 6.

Therefore, the inner teeth gear 20 is formed by intrusion forming in the metal plate material 4 which is the base material, and has a tooth width t2 which is thinner than a plate thickness T2 of the plate material, and is integrally connected at the entire outer periphery of the inner teeth gear 20 to the extruded portion 4e which is extruded from the plate material 4. The inner teeth gear 20 comprises the circular recess 6 which is previously formed by intrusion forming at the side of the back surface 4b of the plate material 4, the gear teeth 21 formed around the inner peripheral surface 6a of the circular recess 6 by intruding the surrounding portion 4c surrounding this circular recess 6 at equal distances, and the connection portion 4d which projects toward the back surface 4b of the plate material 4 corresponding to valleys 22 of the gear teeth 21 and which is connected to the outer peripheral surface 8a of the circular projection 8 formed at the side of the back surface 4b of the circular recess 6.

The second hinge member 2 is produced such that the metal plate material 4 as the base material is intruded to form the inner teeth gear 20 and then, the plate material 4 is subjected to a predetermined cutting and drilling working.

The above explained inner teeth gear 20 is produced through two steps, i.e., the first step for intruding the circular projection 6 at the side of the surface 4a of the plate material 4, and the second step for press forming the gear teeth 21 around the surrounding portion 4c surrounding the circular recess 6 in the plate material 4.

Further, in the inner teeth gear 20, the gear teeth 21 are formed by intruding the surrounding portion 4c surrounding the circular recess 6 which is formed by intrusion at the side of the surface 4a of the plate material 4 toward the back surface 4b. Therefore, when the gear teeth 21 is formed around the surrounding portion 4c surrounding the circular recess 6 in the plate material 4, the portion of the surrounding portion 4c which is pressed is projected and escaped toward the back surface 4b and is plastically deformed, and the connection portion 4d connected to the outer peripheral surface 8a of the circular projection 8 formed at the side of the back surface 4b is formed.

Therefore, in the case of the inner teeth gear 20 of the present invention, as compared with the conventional producing method of the inner teeth gear by precision extrusion with one step only, the forming pressure when the gear teeth 21 are formed can be reduced. As a result, as shown in Fig. 13, the drawn portion 23 which is formed at the tip end portion of each of the gear teeth 21 at the time of formation of the gear teeth can be reduced, the effective tooth width W2 of the gear teeth 21 can be prevented from being reduced, and the plate thickness T2 of plate material 4 which is the base material can be made thinner correspondingly.

Further, since the portion of the surrounding portion 4c which is to be intruded in is moved toward the back surface 4b of the plate material 4 by plastic deformation, the connection portion 4d is formed, the remaining portion of the pressed surrounding portion 4c flows to a superposed portion 4f of the plate material 4 and the extruding portion 4e. Therefore, the connection portion 4d can be formed of only material which is required for securing the strength, waste of material can be reduced, and since composition (flow) of the material of the superposed portion 4d is continuous, its strength can be increased.

The producing method of the inner teeth gear 20 comprises two steps, i.e., a first step in which the plate material 4 is pressed from the side of the surface 4a, thereby forming, in embossed manner, the circular recess 6 having the inner diameter smaller than that of the inner teeth gear 20 to be formed on the side of the surface 4a of the plate material 4, and a second step in which the surrounding portion 4c surrounding the circular recess 6 in the plate 4 is subjected to press forming from the side of the surface 4a of the plate material 4 to the bottom surface 6b of the circular recess 6, thereby intruding the surrounding portion 4c toward the back surface 4b of the plate material 4, and the gear teeth 21 of the inner teeth gear 20 are formed around the inner peripheral surface 6a of the circular recess 6, so that the inner teeth gear 20 connected at its entire outer periphery to the plate material 4 is formed by intrusion forming.

Further, when the gear teeth 21 of the inner teeth gear 20 are press formed around the surrounding portion 4c surrounding the circular recess 6 in the plate material 4, a portion of the surrounding portion 4c which is pressed is projected and escaped toward the back surface 4b. Therefore, the pressed portion of the surrounding portion 4c is plastically deformed, and the connection portion 4d connected to the outer peripheral surface 8a of the circular projection 8 formed at the side of the back surface 4b of the plate material 4 is formed.

Therefore, according to the producing method of the inner teeth gear 20 of the present invention, as compared with the conventional producing method of the inner teeth gear by precision intrusion with one step only, the forming pressure when the gear teeth 21 are formed can be reduced. As a result, the drawn portion 23 which is formed at the tip end portion of each of the gear teeth 21 at the time of formation of the gear teeth can be reduced, the effective tooth width W2 of the gear teeth 21 can be prevented from being reduced, and the plate thickness T2 of the plate material 4 as a base material can be made thinner correspondingly.

In the producing method of the inner teeth gear 20, as shown in Fig. 11, the press formed circular projection 6 is formed such that its inner diameter is shaped into a substantially circular whose inner diameter is slightly smaller than a diameter of the tip ends of the inner teeth gear 20 in the step 1.

Therefore, the structure of the press dies 41 and 42 used in the first step can be simplified. As a result, the costs for producing the press dies 41 and 42 can be reduced, and lifetime of the press dies 41 and 42 can be elongated and therefore, the producing costs of the inner teeth gear 20 can be reduced.

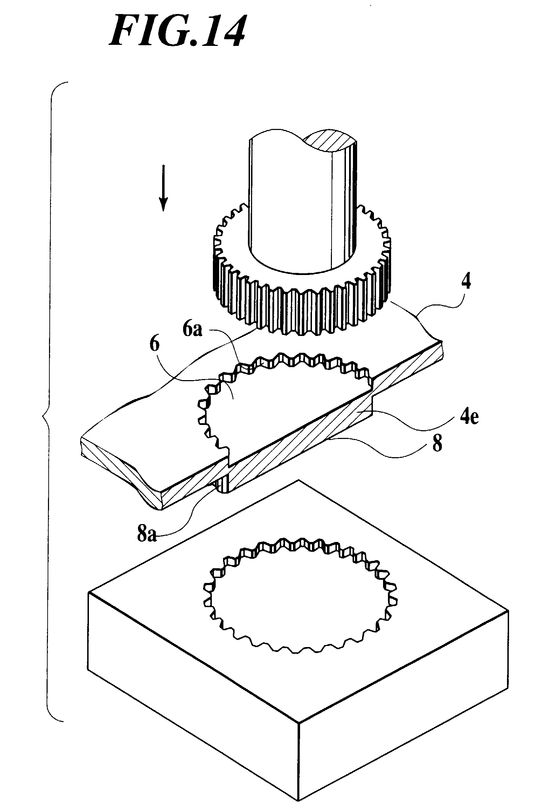

Figs. 14 is an explanatory diagram showing another first step different from the first step shown in Fig. 11. In this first step, the inner peripheral surface 6a of the circular recess 6 is formed into a corrugated shape corresponding to the number of teeth of the inner teeth gear 20.

Therefore, according to the producing method of the inner teeth gear 20 having the first step shown in Fig. 14, as compared with the producing method of the inner teeth gear 20 having the first step shown in Fig. 11, the pressed amount of the plate material 4 which is pressed formed in the second step is reduced. As a result, the press forming pressure against the plate material 4 in the second step can further be reduced.

Therefore, according to the producing method of the inner teeth gear 20 having the first step shown in Fig. 14, as compared with the producing method of the inner teeth gear 20 having the first step shown in Fig. 11, since the life time of the press dies 61 and 62 (see Fig. 12) used in the second step is elongated, the producing costs of the inner teeth gear 20 can be reduced. The drawn portion 23 formed at the tip end of the tooth of each of the gear teeth 21 at the time of formation of the gear teeth in the second step can further be reduced, and the plate thickness T2 of the base material can further be made thinner correspondingly.

Although the above described inner teeth gear 20 and its producing method can be used for the reclining mechanism 103 of the vehicle seat 100, the inner teeth gear 20 and its producing method of the present invention should not be limited to be used only for the reclining mechanism of the vehicle seat.

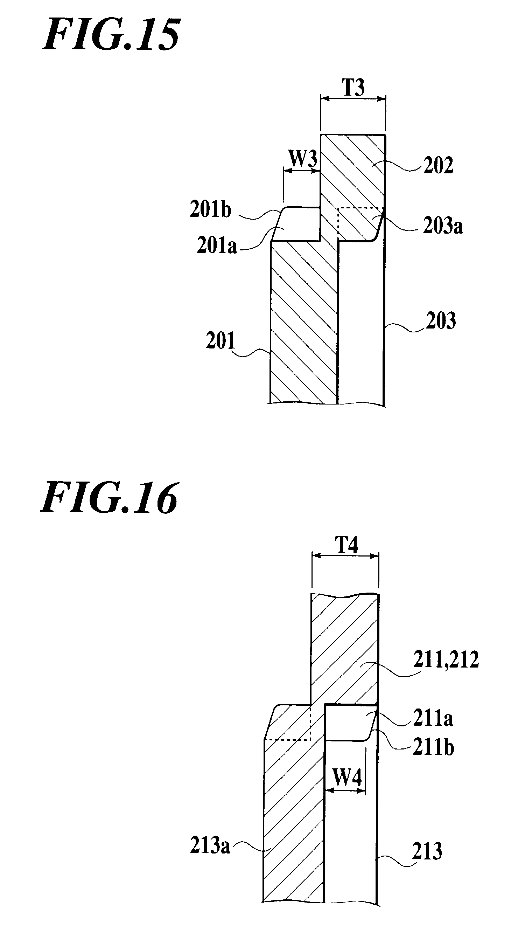

Figs. 15 and 16 show outer and inner teeth gears of a comparative examples.

An outer teeth gear 201 shown in Fig. 15 is formed by one time precision extrusion using press dies having a shape which is substantially the same as the outer teeth gear 201 from a metal plate material 202 which is a base material. A first hinge member 203 is formed by subjecting the plate material to a predetermined cutting and drilling works after the outer teeth gear 201 is formed.

Therefore, as shown in Fig. 15, the outer teeth gear 201 is integrally connected at its entire outer periphery with the first hinge member 203, and an inner teeth gear 203a is formed on a back surface of each of the gear teeth 201a by extruding the outer teeth gear 201.

An inner teeth gear 211 shown in Fig. 16 is formed by one time precision intrusion using press dies having a shape which is substantially the same as the inner teeth gear 211 from a metal plate material 212 which is a base material. A second hinge member 213 is formed by subjecting the plate material 212 to a predetermined cutting and drilling works after the inner teeth gear 211 is formed.

Therefore, the inner teeth gear 211 is integrally connected at its entire outer periphery with the second hinge member 213, and an outer teeth gear 213a is formed on a back surface of each of the gear teeth 211a by extruding the inner teeth gear 211.

According to these example, during the precision extrusion forming, since the extrusion forming is carried out one time, a high load is applied to the press dies. Further, when the gears are formed, since the load is concentrated on a tip end portion of tooth of each of the inner and outer teeth, if the forming load becomes high, the lifetime of the press dies is shortened.

Further, each of the gear teeth 201a of the outer teeth gear 201 which is formed at the time of extrusion forming is pressed by the press dies along its tooth shape, the opposite side from the pressed side is drawn by remaining portion to generate sags, and the sags of drawn portion 201b becomes greater as approaching the tip end of the tooth. Therefore, the effective tooth width W3 of each of the gear teeth 201a of the outer teeth gear 201 is reduced. Further, since a drawn portion 211b is likewise generated in the inner teeth gear 211, the effective tooth width W4 of each of the gear teeth 211a of the inner teeth gear 211 is also reduced. Therefore, meshing margins of the inner and outer gears 211 and 201 are reduced, and the meshing strength is lowered.

Therefore, in order to appropriately set the strength of the gear teeth 201a and 211a of both the outer and inner teeth gears 201 and 211, it is necessary to set the plate thicknesses T3 and T4 of the base material of both the gears 201 and 211 while taking into account the drawn portions 201b and 211b of both the gears 201 and 211. As a result, the plate thicknesses T3 and T4 of the first hinge member 203 becomes excessively thick by the thickness T3 of the drawn portion 201b of the outer teeth gear 201, and the plate thickness of the second hinge member 213 becomes excessively thick by the thickness of the drawn portion 211b of the inner teeth gear 211.

Therefore, in the case of the conventional outer and inner teeth gears 201 and 211, when they are formed from the plate materials 202 and 212 which are the base materials, it is necessary to increase the plate thicknesses T3 and T4 of each of the first and second hinge members 203 and 213 due to the drawn portions 201b and 211b formed at the tooth tip ends of each of the gears 201a and 211a. Therefore, the forming load is further increased, the lifetime of the press dies is shortened and thus, the costs are increased.

Further, in this precision intrusion forming, since the circular projection having gear teeth is formed by extrusion such as to shearing the plate material 212, although the superposed portion of the circular projection and the plate material 212 is connected to each other, composition (flow) of the base material of the superposed portion is not continuous, its strength is reduced. Although the inner teeth gear 203a is formed on the back surface of the outer teeth gear 201, this has nothing to do with strength almost at all, and the material is uses wastefully. Furthermore, since the outer and inner teeth are formed using one sheet of plate, it is difficult to distinguish from each other, and there is a possibility that they may be assembled erroneously.

## Claims

1. A producing method of an outer teeth gear, comprising:
pressing a plate material for extrusion forming, in an embossed manner, a circular projection having a diameter greater than that of a gear tooth to be formed at a surface side of the plate material;
pressing back an outer peripheral portion of a circular projection at an equal distance toward a back surface side of a plate material to form a gear tooth around the outer peripheral portion of the circular projection; and
projecting a pressed portion of an outer peripheral portion toward a back surface side of a plate material to form a connection portion connected to an inner peripheral surface of a circular recess formed at a back surface side of a circular projection.

2. A producing method of an outer teeth gear according to claim 1, wherein an outer peripheral surface of said circular projection formed is formed into a corrugated shape corresponding to a number of teeth of an outer teeth gear.

3. A producing method of an inner teeth gear, comprising:
pressing a plate material for intrusion forming, in an embossed manner, a circular recess having a diameter smaller than that of a gear tooth to be formed at a surface side of the plate material;
pressing a surrounding portion surrounding a circular recess at an equal distance toward a back surface side of a plate material to form gear teeth around an inner peripheral portion of a circular recess; and
projecting a pressed portion of a surrounding portion toward a back surface side of a plate material to form a connection portion connected to an outer peripheral surface of a circular projection formed at a back surface side of a circular recess.

4. A producing method of an inner teeth gear according to claim 3, wherein an inner peripheral surface of said circular recess formed is formed into a corrugated shape corresponding to a number of teeth of an inner teeth gear.

5. An outer teeth gear, comprising:
a plate material having a surface side, a back surface side, and a circular recess formed on the back surface side, the circular recess defined by an inner peripheral surface;
a circular projection formed on the surface side of the plate material corresponding to the circular recess on the back surface side by extrusion forming, the circular projection having an outer peripheral portion;
a gear tooth formed around the outer peripheral portion of the circular projection by pressing back the outer peripheral portion of the circular projection at an equal distance toward the back surface side of the plate material, the gear tooth having a valley; and
a connection portion projecting toward the back surface side of the plate material corresponding to the valley of the gear tooth, the connection portion connected to the inner peripheral surface of the circular recess.

6. An inner teeth gear, comprising:
a plate material having a surface side a back surface side, and a circular recess formed on the surface side, by intrusion forming, the circular recess defined by an inner peripheral portion;
a circular projection formed on the back surface side of the plate material corresponding to the circular recess, the circular projection having an outer periphery portion;
a gear tooth formed around the inner peripheral portion of the circular recess by pressing a surrounding portion surrounding the circular recess at an equal distance toward the back surface side of the plate material, the gear tooth having a valley; and
a connection portion projecting toward the back surface side of the plate material corresponding to the valley of the gear tooth, the connection portion connected to the outer peripheral surface of the circular projection.

7. A method of manufacturing a gear (10; 20) from a plate (3) of material, the method comprising the steps of:
pressing said plate (3) to form a projection (5; 8) on one side thereof and a recess (6; 7) on an opposing side thereof; and
forming teeth (11; 21) of the gear by pressing one of an outer peripheral portion (5a) of said projection and a portion (4c) disposed about the outer peripheral portion of said recess.

8. A gear (10; 20) formed from a plate (3) of material, said gear comprising:
a plurality of teeth (11; 21) in one of an outer peripheral portion (5a; 4c) of a projection (5) and a recess (6) in said plate of material, said teeth being spaced apart one from another along said outer peripheral portion; and
connecting portions (5b; 4d) in the other of said outer peripheral portion of the projection and the recess, said connecting portions corresponding to the space between the teeth and being connected to said other of said outer peripheral portion of the projection and the recess to improve strength of the gear.
